# EUROPEAN PATENT SPECIFICATION

(11) **EP 1 972 189 B1**
(45) Date of publication and mention of the grant of the patent: **26.05.2010**
(21) Application number: 07005900.1
(22) Date of filing: 22.03.2007
(51) Int. Cl.: A01C 3/02

(54) **A method for reducing emission from slurry, a slurry distributor and use of the method**
Verfahren zum Verringern der Emission von Schlamm, Schlammverteiler und Anwendung des Verfahrens
Procédé de réduction d'émission de boue, distributeur de boue et utilisation du procédé

(43) Date of publication of application: 24.09.2008
(73) Proprietor: Tim Thyregod A/S, 7323 Give (DK)
(72) Inventor: Toft, Morten, 8860 Ulstrup (DK)
(74) Representative: Olesen, Kaj

(56) References cited:
- DE-A1- 19 534 874
- DE-A1- 19 541 920
- NL-C2- 1 012 650

## Description

### Background of the invention

The invention relates to a method for reducing emission from slurry, a slurry distributor and use of the method.

### Description of the Related Art

It is known that slurry smells bad particularly after being stirred up during the distribution on the soil of e.g. an agricultural field.

Furthermore, it is known that the fertilizing effect of the slurry is reduces when the slurry is delivered on top of the soil due to volatilisation of primarily ammonia.

It is therefore known to deliver the slurry into the soil by making a furrow, inserting the slurry into the furrow and covering the slurry with soil. But it takes a lot of power to draw a large number of harrow teeth and slurry covering mechanisms through the soil, hereby reducing the width of the slurry distributor and increasing the demands to the distributor construction.

The reduced operational width of the distributor has the consequence that it takes longer to distribute the slurry and it necessitates that the distributor runs between the tracks ordinarily used for field work e.g. when distributing artificial fertilizer, when spraying with pesticides or other. Driving between the standard tracks can reduce the outcome up the field with up to 5 %.

From European patent application EP 0569321 A1 and Dutch patent application NL 1012650 C2 it is known to provide a slurry distributor with means for mixing nitric acid into the slurry just prior to spreading the slurry to e.g. reduce ammonia volatilization. But this solution demands large amounts of nitric acid which is costly and difficult to manage.

From German patent application DE 3727350 A1 it is known to provide a slurry distributor with means for mixing air into the slurry before distribution to increase the slurry volume and thereby increase the flow speed through the distributor, thus reducing the risk of the slurry clogging the distributing arrangement of the slurry distributor. However the increased volume of the slurry will also increase the volatilization surface of the slurry.

An object of the invention is therefore to provide means and method for a more cost-efficient way of reducing emission from distributed slurry.

### The invention

The invention provides for a method for reducing emission from slurry. The method comprises the steps of
● delivering the slurry to an application site, and
● providing at least a part of the slurry with an emission reducing layer, wherein the emission reducing layer is made partly or entirely of the slurry or a portion of the slurry.

Generating an emission reducing layer from the slurry is advantageous in that hereby emission is reduced, by only treating a part of the slurry and by making the emission reducing layer partly or entirely of the slurry, the materials to produce the emission reducing layer are always close at hand.

Furthermore, by this method the overall volume of the distributed slurry is maintained substantially unaffected, hereby ensuring that the volatilization surface of the slurry is not increased. By also applying an emission reducing layer to the slurry, it is ensured that emission from the slurry is reduced.

It should be emphasised that the term "slurry" is to be understood as any kind of liquid manure, organic fertilizer, sludge or similar liquids or semi-liquids in the form of a watery mixture of primarily insoluble matter.

It should also be emphasised that the term "emission reducing layer" is to be understood as any kind of cover, membrane, enclosing or other, suitable for making a layer on the slurry for reducing emission from the slurry, where said emission primarily is emission of ammonia but also other emissions of other fertilizing or nutritive substances of the slurry, other emissions contributing to the generally bad smell of the slurry or emissions contributing to atmospheric pollution.

Even further, it should be emphasised that the term "application site" is to be understood as any kind of field, ground or the like, wherein the fertilizing and/or nutritive qualities of the slurry is utilized.

In an aspect of the invention, said emission reducing layer is produced substantially during the delivery of said slurry to said application site.

It is cost-efficient to generate the emission reducing layer on the fly as the slurry is delivered, in that no tanks, buffers or other is needed to store the emission reducing substance from which the emission reducing layer is made.

Furthermore, the emission reducing layer has to decompose so that the emission reducing layer has disappeared some soon after delivery (along with the slurry). It is therefore also advantageous that no special measures have to be taken to start the degeneration process of the emission reducing substance at a specific time (i.e. when the substance is applied to the delivered slurry to form an emission reducing layer), in that it can start immediately after the production.

In an aspect of the invention, said emission reducing layer is provided to said slurry substantially during the delivery of said slurry to said application site.

If the emission reducing layer is provided to the slurry before the delivery, it could be difficult to keep the two separated and positioned correctly and if the emission reducing layer is provided to the slurry too long after the delivery, much of the volatile parts of the slurry would already have been emitted, hereby reducing the effect of the emission reducing layer.

In an aspect of the invention, the production of said emission reducing layer involves adding an additive for increasing said layers emission reducing qualities.

Hereby is achieved an advantageous embodiment of the invention.

In an aspect of the invention, said additive is an odour reducing, odour masking and/or deodorizing agent such as acid or ozone.

Slurry has a pungent and repellent smell and especially when the slurry is stirred up - like during delivery to an application site - this negative quality of the slurry is pronounced. It is therefore advantageous to provide the emission reducing layer with an additive that will improve the layers ability to reduce the pungent and repellent smell of the slurry.

In an aspect of the invention, said portion of said slurry is a substantially liquid portion of said slurry i.e. a part quantity of said slurry where some or all the solid matter of said slurry has been removed.

Making the emission reducing layer from a liquid portion of the slurry substantially without any major solid particles is advantageous, in that this material is more uniform i.e. having more predictable qualities, therefore making it more suitable to be used for making an emission reducing layer.

In an aspect of the invention, said substantially liquid portion is produced through a separation process such as filtering or centrifugation of said portion of said slurry.

Hereby is achieved an advantageous embodiment of the invention.

In an aspect of the invention, said emission reducing layer is foam made of said slurry or a portion of said slurry.

Foam is basically bubbles of a gas such as air trapped in the slurry or slurry portion. Air does not emit anything and if the foam consists of large amounts of air (compared to the amount of slurry) the emission from the foam is severely reduced compared to the raw slurry. It is therefore advantageous to use slurry foam as an emission reducing layer on the delivered slurry.

In an aspect of the invention, said foam is made through a mechanical process such as injection of a gas such as air, by beating gas into said slurry or said slurry portion or by depressurizing said slurry or said slurry portion.

It is advantageous to make the foam through a mechanical process in that no additive or other is needed.

In an aspect of the invention, said foam is made by adding a foam inducing agent such as sulphuric acid to said slurry or said slurry portion.

By adding a foam inducing agent to the slurry or slurry portion it is possible to generate the foam in a simple and cost-efficient manner.

In an aspect of the invention, said foam is made through a thermal process such as heating-up said slurry or said slurry portion.

Most semi-solid liquids such as slurry will have a tendency to generate a foam layer when heated and heating of the slurry or slurry portion is therefore a simple and cost-efficient way of generating slurry foam.

In an aspect of the invention, said foam is stabilized through adding a foam stabilizing agent.

It is advantageous to add a foam stabilizing agent to the slurry foam in that this will prolong the emission reducing effect of the foam.

In an aspect of the invention, said emission reducing layer is substantially only applied to the part of said slurry that otherwise would be in free contact with the surrounding air, in that it is cost-efficient to only apply the emission reducing layer where it is needed.

Furthermore, the invention provides for a slurry distributor for performing the above described method. The slurry distributor comprises a vessel for containing slurry, a distributing arrangement for delivering the slurry from the vessel to an application site, means for creating a substantially liquid portion of the slurry through a separation process, and layer means for providing at least a part of the slurry with an emission reducing layer, wherein the emission reducing layer is made partly or entirely of the substantially liquid portion.

Hereby is achieved an advantageous embodiment of the invention.

In an aspect of the invention, said slurry distributor comprises foam generating means for generating foam to be established as said emission reducing layer on said slurry.

Even further, the invention provides for use of a method according to any of claims I to 13 for reducing emission from slurry delivered to a field comprising crops.

It is particularly important not to drive with heavy loads in planted fields, in that the crops will be damaged. However, as previously explained it is sometimes necessary to do so and it is therefore advantageous that this always happens in the same tracks. By using a method according to the invention for reducing emission from delivered slurry, it is ensured that the slurry delivery process can happen in the tracks used when performing other crops caring tasks.

Furthermore, the crops will also provide shelter for the emission reducing layer hereby reducing the risk of any undesired displacement of the emission reducing layer.

### Figures

The invention will be described in the following with reference to the figures in which
- fig. 1: illustrates a slurry distributor as known in the art, as seen from the side,
- fig. 2: illustrates an embodiment of a slurry distributor according to the invention, as seen from the side,
- fig. 3: illustrates another embodiment of a slurry distributor according to the invention, as seen from the side,
- fig. 4: illustrates foam generation by means of an additive, as seen from the side,
- fig. 5: illustrates foam generation by means of gas injection, as seen from the side,
- fig. 6: illustrates foam generation by means of heating, as seen from the side,
- fig. 7: illustrates foam generation by means of beating, as seen from the side,
- fig. 8: illustrates foam generation by means of depressurizing, as seen from the side,
- fig. 9: illustrates a centrifuge for separating the liquid portion of the slurry, as seen from the side,
- fig. 10: illustrates filter means for separating the liquid portion of the slurry, as seen from the side,
- fig. 11: illustrates slurry delivered in furrows between rows of crops, as seen from the front,
- fig. 12: illustrates slurry delivered on the ground between rows of crops, as seen from the front, and
- fig. 13: illustrates slurry substantially covering the entire ground, as seen from the front.

### Detailed description

The invention relates to a slurry distributor 1 and a method for reducing emission from slurry 3 delivered to an application site 5 by providing the slurry 3 with an emission reducing layer 11 made partly or entirely of the slurry 3.

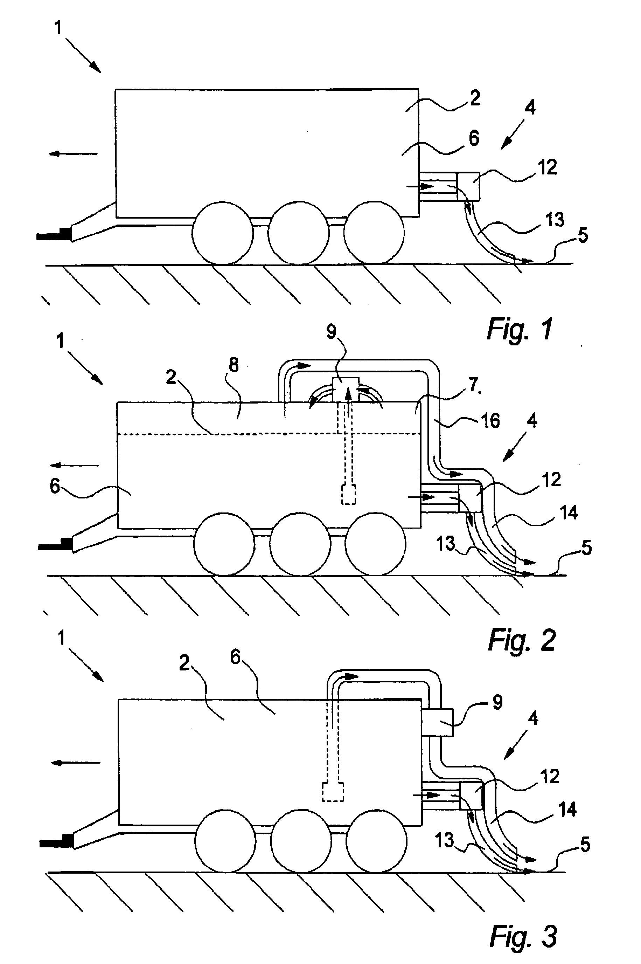

Fig. 1 illustrates a slurry distributor 1 as known in the art, as seen from the side.

A traditional slurry distributor 1 comprises a vessel 2 for containing the slurry 3 and a distributing arrangement 4 for delivering the slurry 3 from the vessel 2 to the application site 5.

Fig. 2 illustrates an embodiment of a slurry distributor 1 according to the invention, as seen from the side.

In this embodiment of the invention the vessel comprises three different tanks 6, 7, 8: a slurry tank 6 for containing slurry 3, an additive tank for containing an additive and an emission reducing substance tank 8 for containing an emission reducing substance from which an emission reducing layer 11 is made.

The slurry distributor 1 further comprise substance generating means 9 for generating the emission reducing substance by mixing some of the slurry 3 or an extraction of the slurry 3 with an additive.

In this embodiment the additive is sulphuric acid but in another embodiment the additive could be any other kind of acid, chemical or other artificial or natural substances capable of increasing the emission reducing layers 11 ability to reduce emission from the delivered slurry 3. This increased ability to reduce emission could e.g. arise from the additive having an odour reducing, odour masking and/or deodorizing effect on the emission reducing layer 11 or on the slurry on which the emission reducing layer 11 is applied, it could arise from the additive prolonging the life of and/or stabilizing the emission reducing layer 11 or it could arise from the additive generating a sealing quality in the emission reducing layer 11 making the emission reducing layer 11 reduce emission of ammonia or other from the slurry 3.

In another embodiment of the invention the emission reducing substance could be produced by adding ozone to a portion of the slurry 3 hereby producing a substantially odourless emission reducing substance, which when applied to the delivered slurry 3 as an emission reducing layer 11 would reduce the emission of bad smelling gases and other from the slurry 3,

In this embodiment the emission reducing substance is generated while the slurry 3 is being transported from the stationary slurry tank (usually located near a farm) to the application site 5. During the transportation the substance generating means 9 extracts a substantially liquid slurry portion from the slurry tank 6 and mixes it with an additive in the form of sulphuric acid from the additive tank 7 and delivers the mixture to the emission reducing substance tank 8, where the emission reducing substance is stored until it is to be applied to the delivered slurry 3.

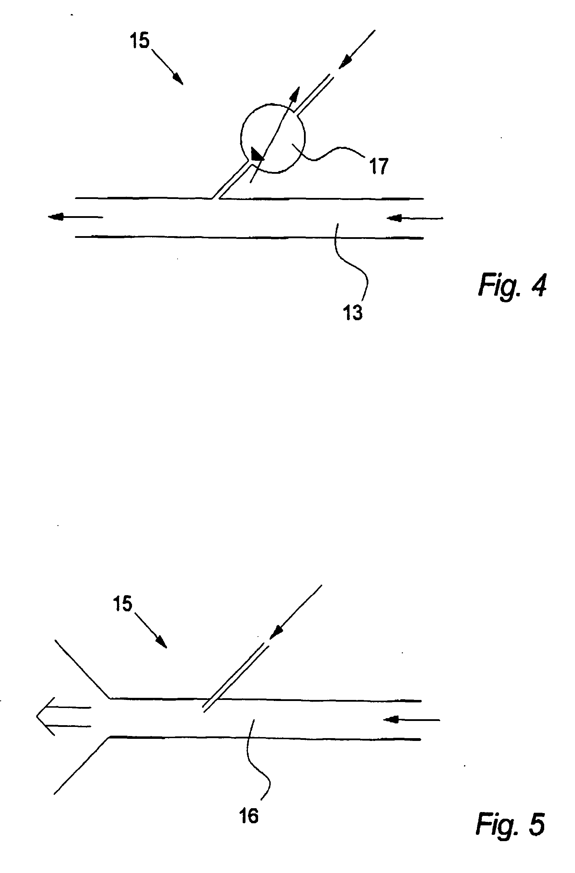

In another embodiment of the invention the slurry distributor 1 would not comprise an additive tank 7 in that the emission reducing substance and thereby the emission reducing layer 11 is generated without any kind of additive e.g. by one of the methods disclosed under fig. 5 to 8 or at least generated without any kind of additive not present and easily accessible in the surroundings - such as air.

The absence of an additive tank 7 could also be caused by the fact that the emission reducing substance was pre-made from the slurry 3 or parts of the slurry 3 e.g. at a central emission reducing substance manufacturing facility wherefrom the emission reducing substance is provided to the emission reducing substance tank 8 and then applied to the slurry 3 when it is delivered to the application site 5.

In another embodiment of the invention the slurry distributor 1 would comprise neither substance generating means 9 nor an emission reducing substance tank 8 in that the emission reducing layer 11 would be generated by applying an additive such as sulphuric acid directly to the surface of the applied slurry or by applying the additive to the slurry substantially immediately before it is applied, hereby making the slurry 3 and the additive generate an emission reducing layer 11 on the delivered slurry 3.

The additive could also be added to substantially the entire volume of slurry 3 e.g. before or during transportation to the application site 5 or immediately before the slurry 3 is delivered to the field 5. The additive would then trigger that the emission reducing layer 11 was generated when the slurry 3 comprising the additive was exposed to air, oxygen, moisture, sunlight or other.

In this embodiment of the invention the slurry distributor 1 is designed to be connected to a tractive device such as a tractor for moving the slurry distributor 1 around but in another embodiment the slurry distributor 1 could be self-propelled.

In this embodiment the distributing arrangement 4 for delivering the slurry 3 to the application site 5 is mounted on the rear end of the slurry distributor 1 but in another embodiment the distributing arrangement 4 could be mounted elsewhere on the slurry distributor 1 or the distributing arrangement 4 could be formed as a separate vehicle either self-propelled or pulled by the slurry distributor 1.

In this embodiment the distributing arrangement 4 is formed as a transversely arranged boom 12 with a width of e.g. 24 meters. The boom 12 comprises a number of slurry delivery conduits 13 formed as substantially flexible hoses 13 trailing the slurry distributor 1 in that the hoses 13 are being dragged over the ground during the delivery of the slurry 3 to the ground 5. The slurry delivery conduits 13 could also end just above the ground making the slurry 3 fall freely onto the application site 5.

In another embodiment the distributing arrangement 4 could comprise furrow generating means and the slurry delivery conduits 13 would then provide the slurry 3 in these furrows 26. The distributing arrangement 4 could then also comprise covering means for subsequently covering the distributed slurry 3 and emission reducing layer 11 with soil to further reduce the emission from the distributed slurry 3.

In even further embodiments the distributing arrangement 4 could be any kind of arrangement suitable for delivering the slurry 3 from the vessel 2 to the application site 5 either by placing the slurry 3 directly on the ground e.g. through slurry delivery conduits 13 or by spraying, hurling or in other ways ejecting the slurry 3 from the distributor 1 to finally land on the application site 5.

In this embodiment of the invention the slurry distributor 1 further comprise layer means 14 for providing the emission reducing substance to the just distributed slurry 3 to form an emission reducing layer 11 on the slurry 3. In this embodiment these layer means 14 are formed as substance conduits 16 delivering the emission reducing substance directly on top of the just delivered slurry 3 to form an emission reducing layer 11 on the slurry 3.

In another embodiment of the invention the substance conduits 16 could be formed integrally with the slurry delivery conduits 13, the substance conduits 16 could be connected to and discharge into the slurry delivery conduits 13, the substance conduits 16 could be arranged completely separate from the slurry delivery conduits 13 or the entire distributing arrangement 4 or the layer means 14 could be arranged otherwise - e.g. depending on how the slurry 3 is distributed - as long as the layer means 14 is able to provide all or some of the slurry 3 with a emission reducing layer 11.

The arrow shown in fig. 1 to 3 in front of the slurry distributor 1 illustrates the normal direction of travel during normal operation of the slurry distributor 1 i.e. when the slurry distributor 1 is delivering slurry to an application site 5.

The arrows shown in the vessel 2, the distributing arrangement 4, substance generating means 9 and other in fig. 1 to 3, illustrates the normal direction of flow during normal operation of the slurry distributor 1 i.e. when the slurry distributor 1 is delivering slurry to an application site 5.

Fig. 3 illustrates another embodiment of a slurry distributor 1 according to the invention, as seen from the side.

In this embodiment of the invention the slurry distributor 1 comprise neither an additive tank 7 nor an emission reducing substance tank 8 hereby making the entire vessel 2 substantially act as a slurry tank 6.

In this embodiment the additive tank 7 and the emission reducing substance tank 8 is not needed because the emission reducing substance is made on the fly as the slurry 3 is delivered to the application site 5.

In this embodiment an extraction of the slurry 3 is drawn from the slurry tank 6 and lead to substance generating means 9 placed on the outside on the rear of the slurry distributor 1.

In another embodiment the substance generating means 9 could be placed elsewhere such as inside the vessel 2.

In the substance generating means 9 extracted slurry portions are continuously transformed to an emission reducing substance which through the substance conduits 16 is lead down to the just delivered slurry 3, where the emission reducing substance is distributed onto the slurry 3 to form an emission reducing layer 11.

Fig. 4 illustrates foam generation by means of an additive, in that a slurry delivery conduit 13 is provided with an inflow of additive.

In this embodiment of the invention an additive pump 17 provides the passing flow of slurry 3 with an additive such as sulphuric acid or another acid or chemical enabling that the free surface of the delivered slurry will froth and create a layer of foam to act as an emission reducing layer 11 on the delivered slurry.

In this embodiment the additive is delivered to the entire volume of the slurry 3 but in another embodiment the additive could be provided to only a part of the slurry 3 e.g. the part of the slurry facing up when delivered to the application site 5 or the additive could be provided only to the surface or a part of the surface of the passing flow of slurry 3.

Fig. 5 illustrates foam generation by means of gas injection, as seen from the side.

The figure illustrates a substance conduit 16 through which a part quantity of the slurry 3 flows. In the substance conduit 16 the flow of slurry extract is supplied with a gas, which is injected in the flow to create bubbles of said gas in the slurry and thereby generate foam capable of acting as an emission reducing layer 11 when applied onto the delivered slurry 3.

In this embodiment the gas is ordinary air, but in another embodiment the gas could be ozone or another gas which besides enabling that the foam can be made could e.g. also improve the emission reducing layers 1 ability to reduce emission.

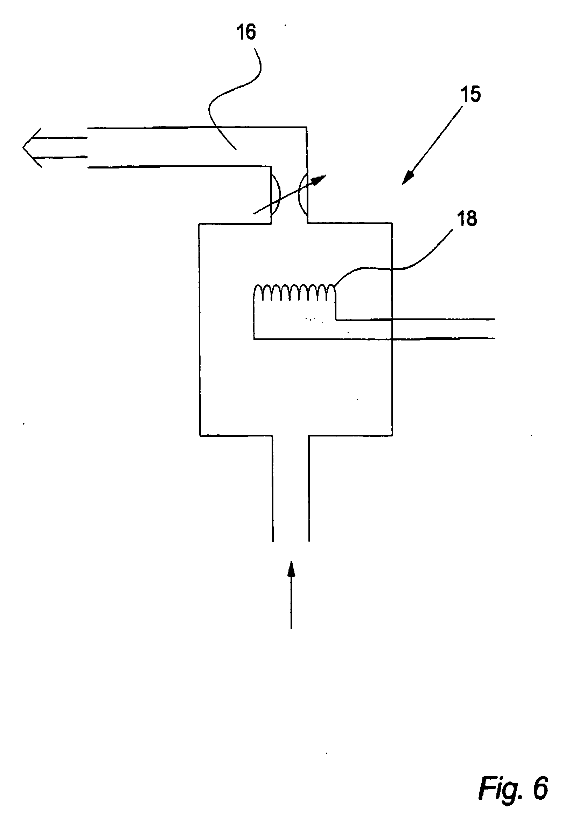

Fig. 6 illustrates foam generation by means of heating, as seen from the side.

In this embodiment of the invention the foam generating means 15 comprise a heat generating element 18 capable of heating the flow of slurry extract on the fly.

In this embodiment the figure shows a substance conduit 16 and foam generating means 15 for generating an emission reducing layer 11 on the distributed slurry 3 but in another embodiment the illustrated arrangement could be foam generating means 15 placed in the slurry delivery conduits 13 to heat-up the entire volume of slurry before distribution and then when the slurry 3 has been delivered it will generate a top layer of foam to act as an emission reducing layer 11.

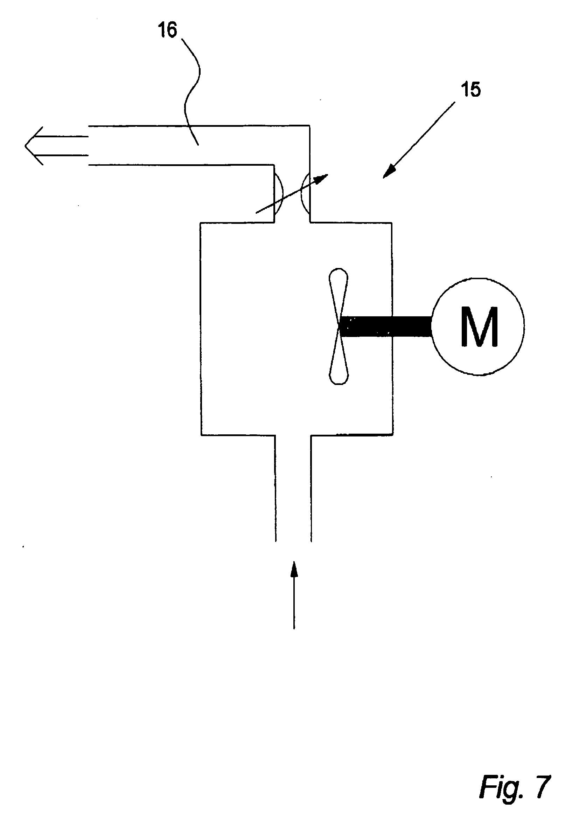

Fig. 7 illustrates foam generation by means of beating, as seen from the side.

In this embodiment the extracted portion of slurry 3 is mechanically mixed with air on its way through the substance conduits 16, to generate an emission reducing substance suitable to function as the emission reducing layer 11

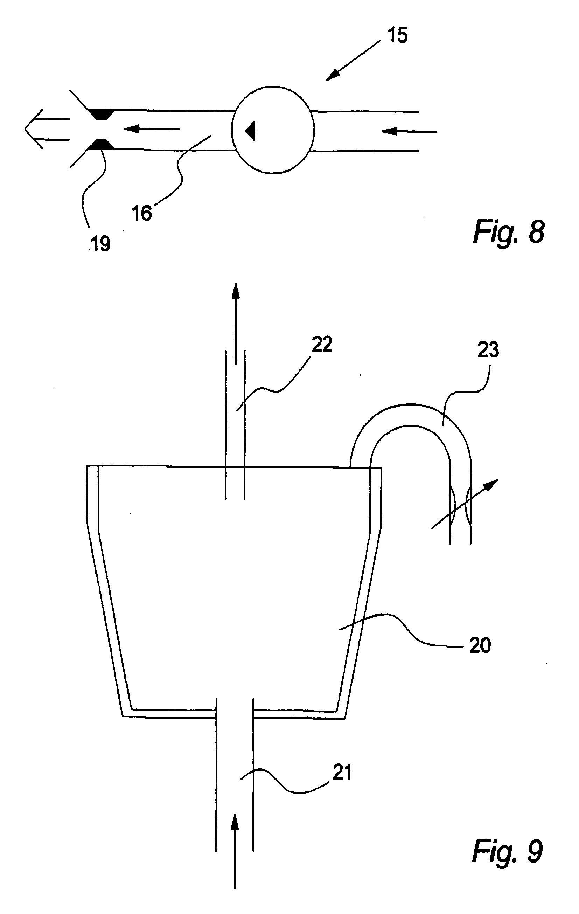

Fig. 8 illustrates foam generation by means of depressurizing, as seen from the side.

In this embodiment the substance conduits 16 are provided with a pump capable of generating a relatively high pressure in the flow of extracted slurry 3. By delivering the emission reducing substance to the delivered slurry 3 through a nozzle 19 suitable for this purpose, foam will be generated to act as the emission reducing layer 11.

Fig. 4 to 8 have all disclosed foam generating means 15 and methods for generating foam from slurry 3 to act as the emission reducing layer 11 but in another embodiment of the invention the emission reducing layer 11 could also be formed as a layer of emission reducing slime substantially covering the delivered slurry 3, it could be formed as a substance that would harden when provided onto the delivered slurry 3 to form an emission reducing crust or shell acting as the emission reducing layer 11, it could be dry matter distributed on the delivered slurry 3 to form the emission reducing layer 11 or the emission reducing layer 11 could be any made from any other kind of substances, wherein the substance i.e. the foam, the slime, the crust, the dry matter etc. would be produced partly or entirely from the slurry 3.

Furthermore, fig. 4 to 8 have all disclosed foam generating means 15 placed in the substance conduits 16 or the slurry delivery conduits 13 but in another embodiment the foam generating means 15 could be placed elsewhere such as in one central position where foam is generated before the slurry 3 or the emission reducing substance is lead to the conduits 13, 16.

Fig. 9 illustrates a centrifuge 20 for separating the liquid portion from the dry matter of the slurry 3, as seen from the side.

In this embodiment a portion of the slurry 3 is lead into the centrifuge 20 through a slurry inflow 21. In the centrifuge 20 the slurry is spun around making the heavier parts of the slurry 3 travel furthest out in the centrifuge 20 enabling that a liquid portion of the slurry 3 can be drawn off at a centrally placed liquid outlet 22 and a more solid portion of the slurry 3 can be drawn off at a peripherally placed semi-solid outlet 23.

The liquid portion could then be further processed to act as the emission reducing layer 11 while the semi-solid portion could be lead back to the slurry tank 6 or into the slurry delivery conduits 13 or the semi-solid portion could be further processed to act as the emission reducing layer 11 while the liquid portion could be lead back to the slurry tank 6 or into the slurry delivery conduits 13.

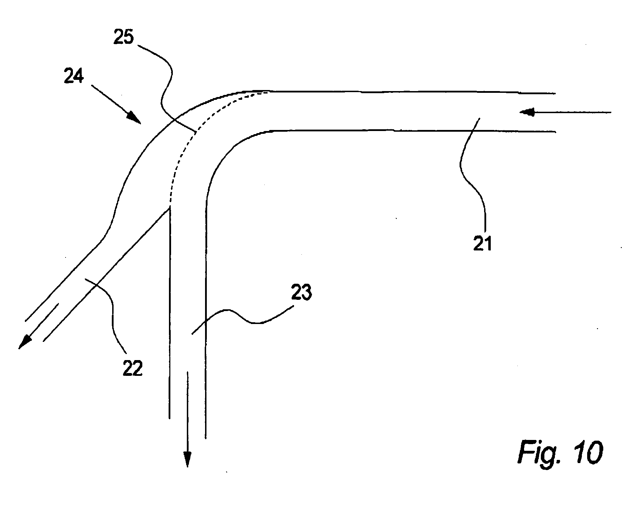

Fig. 10 illustrates filter means 24 for separating the liquid portion from the dry matter of the slurry 3, as seen from the side.

In this embodiment the slurry 3 is lead to the filter means 24 through a slurry inflow 21. In a sharp turn the slurry 3 passes a filter grate 25 where through a liquid portion of the slurry 3 can pass to the liquid outlet 22 while the more solid portion of the slurry 3 continues towards the semi-solid outlet 23

Because of this design the filter means 24 is substantially self-cleaning.

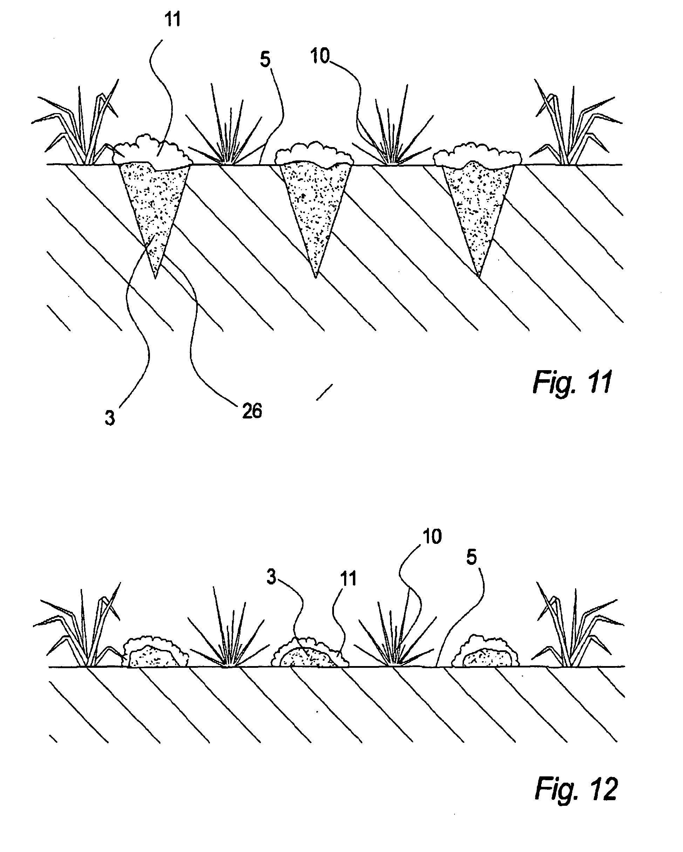

Fig. 11 illustrates slurry 3 delivered in furrows 26 between the rows of crops 10, as seen from the front.

To ensure that the nutritive and/or fertilizing elements of the slurry 3 are transferred to the crops as efficiently as possible it could be advantageous to deliver the slurry 3 in open furrows 26. To avoid or reduce emission from the delivered slurry, the slurry is therefore provided with an emission reducing layer 11, which in this embodiment is slurry foam placed on top of the slurry 3 to seal the slurry 3 from the surroundings.

In this embodiment the slurry distributor 1 would properly have to comprise means for generating the furrows 26 but in that the slurry distributor 1 do not have to comprise means for covering the furrows 26 after the slurry 3 has been delivered, it still will be possible to make the distributor 1 with a standard operational width.

In this embodiment the application site 5 is a field comprising rows of crops 10 in the form of barley but in another embodiment of the invention the application site 5 could be any kind of agricultural field where the crops are substantially arranged in rows 10 or sites 5 where the crops are arranged more chaotically such as fields, parks, courses, sports grounds, meadows or the like e.g. comprising self-seeded plants and the crops could be any kind of agricultural crops, herbs, vegetables, trees or any other kind of plants.

Fig. 12 illustrates slurry 3 delivered on the ground between the rows of crops 10, as seen from the front.

To minimize the load on the tractive means propelling the slurry distributor 1 it can be advantageous to deliver the slurry 3 to the ground substantially without touching the ground. The slurry 3 could then be laid out in a caterpillar form where the emission reducing layer 11 would be applied to the slurry caterpillars to cover the volatilization surface of the delivered slurry 3 and thereby reduce emission from the slurry 3.

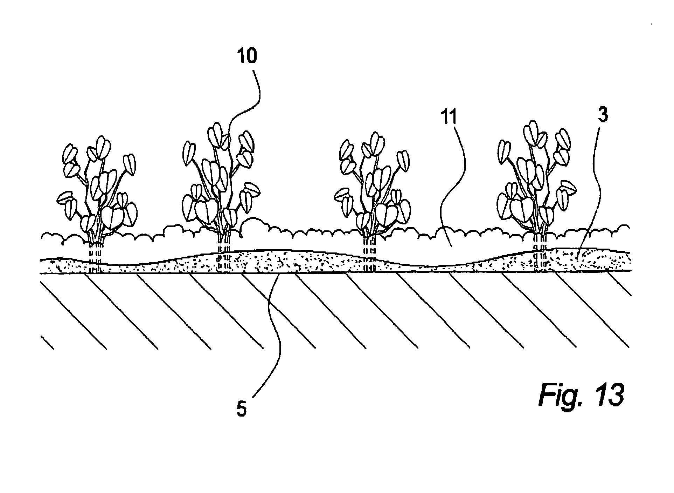

Fig. 13 illustrates slurry 3 substantially covering the entire ground, as seen from the front.

If e.g. an acid such as sulphuric acid was added to a large amount of the slurry 3 before delivery, the major part of the slurry 3 would turn into foam immediately after delivery to form an emission reducing layer 11. The added acid would also trigger that at least some of the ammonia in the slurry 3 is converted to ammonium, which is a nitrogen-containing-ion that can be directly absorbed by plants as nitrogen fertilizer.

In this embodiment the slurry 3 is delivered to a field comprising relatively high crops (e.g. 0.5 meter) and the slurry 3 is spread so that it substantially covers the entire ground. A relatively thick emission reducing layer 11 is established as described above and in that it can take several hours for the foam to collapse it will slowly and gradually emit at least some of the fertilizing parts of the slurry 3 to the surroundings, which then continuously will be absorbed by the crops hereby reducing the emission from the field significantly.

The invention has been exemplified above with reference to specific examples of slurry distributors 1, foam generating means 15, methods for producing and applying the emission reducing layer 11 and other. However, it should be understood that the invention is not limited to the particular examples described above but may be designed and altered in a multitude of varieties within the scope of the invention as specified in the claims.

### List

- 1.: Slurry distributor
- 2.: Vessel
- 3.: Slurry
- 4.: Distributing arrangement
- 5.: Application site
- 6.: Slurry tank
- 7.: Additive tank
- 8.: Emission reducing substance tank
- 9.: Substance generating means
- 10.: Row of crops
- 11.: Emission reducing layer
- 12.: Boom
- 13.: Slurry delivery conduits
- 14.: Layer means
- 15.: Foam generating means
- 16.: Substance conduits
- 17.: Additive pump
- 18.: Heat generating element
- 19.: Nozzle
- 20.: Centrifuge
- 21.: Slurry inflow
- 22.: Liquid outlet
- 23.: Semi-solid
- 24,: Filter means
- 25.: Filter grate
- 26.: Furrow

## Claims

1. A method for reducing emission from slurry (3), said method comprising the steps of
• delivering said slurry (3) to an application site (5), and
• providing at least a part of said slurry (3) with an emission reducing layer (11), **characterized in that** said emission reducing layer (11) is made partly or entirely of said slurry (3) or a portion of said slurry (3).

2. A method according to claim 1, wherein said emission reducing layer (11) is produced substantially during the delivery of said slurry (3) to said application site (5).

3. A method according to claim 1 or 2, wherein said emission reducing layer (11) is provided to said slurry (3) substantially during the delivery of said slurry (3) to said application site (5).

4. A method according to any of the preceding claims, wherein the production of said emission reducing layer (11) involves adding an additive for increasing said layers emission reducing qualities.

5. A method according to claim 4, wherein said additive is an odour reducing, odour masking and/or deodorizing agent such as acid or ozone.

6. A method according to any of the preceding claims, wherein said portion of said slurry (3) is a substantially liquid portion of said slurry (3) i.e, a part quantity of said slurry (3) where some or all the solid matter of said slurry (3) has been removed.

7. A method according to claim 6, wherein said substantially liquid portion is produced through a separation process such as filtering or centrifugation of said portion of said slurry (3).

8. A method according to any of the preceding claims, wherein said emission reducing layer (11) is foam made of said slurry (3) or a portion of said slurry (3).

9. A method according to claim 8, wherein said foam is made through a mechanical process such as injection of a gas such as air, by beating gas into said slurry (3) or said slurry portion or by depressurizing said slurry (3) or said slurry portion.

10. A method according to claim 8, wherein said foam is made by adding a foam inducing agent such as sulphuric acid to said slurry (3) or said slurry portion.

11. A method according to claim 8, wherein said foam is made through a thermal process such as heating-up said slurry (3) or said slurry portion.

12. A method according to any of claims 8 to 11, wherein said foam is stabilized through adding a foam stabilizing agent.

13. A method according to any of the preceding claims, wherein said emission reducing layer (11) is substantially only applied to the part of said slurry (3) that otherwise would be in free contact with the surrounding air.

14. A slurry distributor (1) for performing a method according to any of the preceding claims, wherein said slurry distributor (1) comprises
a vessel (2) for containing slurry (3),
a distributing arrangement (4) for delivering said slurry (3) from said vessel (2) to an application site (5), **characterized in that** said slurry distributor further comprises
means for creating a substantially liquid portion of said slurry through a separation process, and
layer means (14) for providing at least a part of said slurry (3) with an emission reducing layer (11), wherein said emission reducing layer (11) is made partly or entirely of said substantially liquid portion.

15. A slurry distributor (1) according to claim 14, wherein said slurry distributor (1) comprises foam generating means (15) for generating foam to be established as said emission reducing layer (11) on said slurry (3).

16. Use of a method according to any of claims 1 to 13 for reducing emission from slurry (3) delivered to a field comprising crops.

## Patentansprüche

1. Verfahren zur Emissionsverringerung aus Schlamm (3), wobei das Verfahren die Schritte umfasst:
• Lieferung des Schlamms (3) an einen Anwendungsort (5) und
• Versehen mindestens eines Teils des Schlamms (3) mit einer emissionsverringernden Schicht (11), **dadurch gekennzeichnet, dass** die emissionsverringernde Schicht (11) teilweise oder vollständig aus dem Schlamm (3) oder einem Teil des Schlamms (3) hergestellt wird.

2. Verfahren nach Anspruch 1, bei dem die emissionsverringernde Schicht (11) im Wesentlichen während der Lieferung des Schlamms (3) an den Anwendungsort (5) erzeugt wird.

3. Verfahren nach Anspruch 1 oder 2, bei dem der Schlamm (3) im Wesentlichen während der Lieferung des Schlamms (3) an den Anwendungsort (5) mit der emissionsverringernden Schicht (11) versehen wird.

4. Verfahren nach irgendeinem der vorangehenden Ansprüche, bei dem die Produktion der emissionsverringernden Schicht (11) den Zusatz eines Additivs zur Steigerung der emissionsverringernden Eigenschaften der Schicht beinhaltet.

5. Verfahren nach Anspruch 4, bei dem das Additiv ein geruchsverringerndes, geruchsmaskierendes oder deodorierendes Mittel, wie Säure oder Ozon, ist.

6. Verfahren nach irgendeinem der vorangehenden Ansprüche, bei dem der Teil des Schlamms (3) ein im Wesentlichen flüssiger Teil des Schlamms (3) ist, d.h. eine Teilmenge des Schlamms (3), bei der etwas oder alles feste(s) Material des Schlamms (3) entfernt worden ist.

7. Verfahren nach Anspruch 6, bei dem der im Wesentlichen flüssige Teil durch ein Abtrennungsverfahren, wie Filtrieren oder Zentrifugation des Teils des Schlamms (3), erzeugt wird.

8. Verfahren nach einem der vorangehenden Ansprüche, bei dem die emissionsverringernde Schicht (11) Schaum ist, der aus dem Schlamm (3) oder einem Teil des Schlamms (3) hergestellt wird.

9. Verfahren nach Anspruch 8, bei dem der Schaum durch ein mechanisches Verfahren, wie Einspritzen eines Gases wie Luft, durch Einschlagen von Gas in den Schlamm (3) oder den Schlammteil oder durch Erniedrigen des Drucks des Schlamms (3) oder des Schlammteils hergestellt wird.

10. Verfahren nach Anspruch 8, bei dem der Schaum durch Zugabe eines schaumerzeugenden Mittels, wie Schwefelsäure, zu dem Schlamm (3) oder dem Schlammteil hergestellt wird.

11. Verfahren nach Anspruch 8, bei dem der Schaum durch einen thermischen Prozess, wie Erwärmen des Schlamms (3) oder des Schlammteils, hergestellt wird.

12. Verfahren nach irgendeinem der Ansprüche 8 bis 11, bei dem der Schaum durch Zugabe eines Schaumstabilisierungsmittels stabilisiert wird.

13. Verfahren nach irgendeinem der vorangehenden Ansprüche, bei die emissionsverringernde Schicht (11) im Wesentlichen nur auf den Teil des Schlamms (3) aufgebracht wird, der andernfalls im freien Kontakt mit der umgebenden Luft stehen würde.

14. Schlammverteiler (1) für die Durchführung eines Verfahrens nach irgendeinem der vorangehenden Ansprüche, wobei der Schlammverteiler (1) umfasst:
ein Gefäß (2) zum Halten des Schlamms (3);
eine Verteilungsanordnung (4) zum Liefern des Schlamms (3) aus dem Gefäß (2) an einen Anwendungsort (5), **dadurch gekennzeichnet, dass** der Schlammverteiler weiter umfasst:
Mittel zum Schaffen eines im Wesentlichen flüssigen Teils des Schlamms durch ein Abtrennverfahren, und
Schichtungsmittel (14) zum Versehen mindestens eines Teils des Schlamms (3) mit einer emissionsverringernden Schicht (11), wobei die emissionsverringernde Schicht (11) teilweise oder vollständig aus dem im Wesentlichen flüssigen Teil hergestellt wird.

15. Schlammverteiler (1) nach Anspruch 14, bei dem der Schlammverteiler (1) ein Schaumerzeugungsmittel (15) zum Erzeugen von Schaum umfasst, welcher als die emissionsverringernde Schicht (11) auf dem Schlamm (3) anzuordnen ist.

16. Verwendung eines Verfahrens nach irgendeinem der Ansprüche 1 bis 13 zur Verringerung von Emission aus Schlamm (3), der einem Feld zugeführt wird, das Feldfrüchte umfasst.

## Revendications

1. Procédé de réduction d'émission à partir d'une boue (3), ledit procédé comprenant les étapes consistant à
distribuer ladite boue (3) à un site d'application (5), et
pourvoir au moins une partie de ladite boue (3) d'une couche de réduction d'émission (11), **caractérisé en ce que** ladite couche de réduction d'émission (11) est constituée partiellement ou entièrement de ladite boue (3) ou d'une portion de ladite boue (3).

2. Procédé selon la revendication 1, dans lequel ladite couche de réduction d'émission (11) est produite sensiblement pendant la distribution de ladite boue (3) audit site d'application (5).

3. Procédé selon la revendication 1 ou 2, dans lequel ladite couche de réduction d'émission (11) est appliquée à ladite boue (3) sensiblement pendant la distribution de ladite boue (3) audit site d'application (5).

4. Procédé selon l'une quelconque des revendications précédentes, dans lequel la production de ladite couche de réduction d'émission (11) implique l'ajout d'un additif pour augmenter les qualités de réduction d'émission de ladite couche.

5. Procédé selon la revendication 4, dans lequel ledit additif est un agent réduisant les odeurs, masquant les odeurs et/ou désodorisant tel qu'un acide ou de l'ozone.

6. Procédé selon l'une quelconque des revendications précédentes, dans lequel ladite portion de ladite boue (3) est une partie sensiblement liquide de ladite boue (3), c'est-à-dire, une quantité partielle de ladite boue (3) où une partie ou la totalité de la matière solide de ladite boue (3) a été retirée.

7. Procédé selon la revendication 6, dans lequel ladite portion sensiblement liquide est produite par un processus de séparation tel qu'une filtration ou une centrifugation de ladite portion de ladite boue (3).

8. Procédé selon l'une quelconque des revendications précédentes, dans lequel ladite couche de réduction d'émission (11) est une mousse constituée de ladite boue (3) ou une portion de ladite boue (3).

9. Procédé selon la revendication 8, dans lequel ladite mousse est réalisée par un processus mécanique tel qu'une injection d'un gaz tel que de l'air, en battant le gaz dans ladite boue (3) ou ladite portion de boue ou en dépressurisant ladite boue (3) ou ladite portion de boue.

10. Procédé selon la revendication 8, dans lequel ladite mousse est réalisée en ajoutant un agent de production de mousse tel que de l'acide sulfurique à ladite boue (3) ou à ladite portion de boue.

11. Procédé selon la revendication 8, dans lequel ladite mousse est réalisée par un processus thermique tel que le chauffage de ladite boue (3) ou de ladite portion de boue.

12. Procédé selon l'une quelconque des revendications 8 à 11, dans lequel ladite mousse est stabilisée par l'ajout d'un agent de stabilisation de mousse.

13. Procédé selon l'une quelconque des revendications précédentes, dans lequel ladite couche de réduction d'émission (11) n'est sensiblement appliquée qu'à la partie de ladite boue (3) qui, autrement, serait librement en contact avec l'air environnant.

14. Distributeur de boue (1) pour effectuer un procédé selon l'une quelconque des revendications précédentes, dans lequel ledit distributeur de boue (1) comprend :
une cuve (2) pour contenir de la boue (3),
un agencement de distribution (4) pour délivrer ladite boue (3) de ladite cuve (2) à un site d'application (5), **caractérisé en ce que** ledit distributeur de boue comprend en outre :
des moyens pour créer une portion sensiblement liquide de ladite boue par un processus de séparation, et
des moyens formant couche (14) pour pourvoir au moins une partie de ladite boue (3) d'une couche de réduction d'émission (11), dans lequel ladite couche de réduction d'émission (11) est constituée partiellement ou entièrement de ladite portion sensiblement liquide.

15. Distributeur de boue (1) selon la revendication 14, dans lequel ledit distributeur de boue (1) comprend des moyens de génération de mousse (15) pour générer de la mousse devant être établie en tant que couche de réduction d'émission (11) sur ladite boue (3).

16. Utilisation d'un procédé selon l'une quelconque des revendications 1 à 13 pour réduire une émission à partir d'une boue (3) délivrée à un champ comprenant des produits agricoles.
